(19) Europäisches Patentamt
European Patent Office
Office européen des brevets

(11) **EP 2 779 397 A1**

(12) **EUROPEAN PATENT APPLICATION**

(43) Date of publication:
**17.09.2014 Bulletin 2014/38**

(51) Int Cl.:
***H02M 3/158*** (2006.01)

(21) Application number: **13159466.5**

(22) Date of filing: **15.03.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicants:
- **Mitsubishi Electric R&D Centre Europe B.V.**
  **1119 NS  Schiphol Rijk (NL)**
  Designated Contracting States:
  **FR**
- **Mitsubishi Electric Corporation**
  **Chiyoda-ku**
  **Tokyo 100-8310 (JP)**
  Designated Contracting States:
  **AL AT BE BG CH CY CZ DE DK EE ES FI GB GR HR HU IE IS IT LI LT LU LV MC MK MT NL NO PL PT RO RS SE SI SK SM TR**

(72) Inventors:
- **Lefevre, Guillaume**
  **35708 Rennes Cedex 7 (FR)**
- **Rambaud, Luc**
  **35708 Rennes Cedex 7 (FR)**

(74) Representative: **Maillet, Alain**
  **Cabinet Le Guen Maillet**
  **5, place Newquay**
  **B.P. 70250**
  **35802 Dinard Cedex (FR)**

(54) **DC-DC boost and buck converter comprising a boost converter and components enabling the boost converter to act as a buck converter**

(57) The present invention concerns a DC-DC boost and buck converter comprising a boost converter (16a) and components ($S_1$, $D_2$) enabling the boost converter (16a) to act as a buck converter, a first input (1) of the boost converter (16a) being connected to a first input (10a) of the DC-DC boost and buck converter, a second input (2) of the boost converter (16a) being connected to a second input (11a) of the DC-DC boost and buck converter, a first output (3) of the boost converter (16a) being connected to a first output (12a) of the DC-DC boost and buck converter, characterized in that the components ($S_1$, $D_2$) enabling the boost converter (16a) to act as a buck converter are a first ($S_1$) and a second ($D_2$) switches, a first terminal of the first switch ($S_1$) is connected to the second output (4) of the boost converter (16a), a second terminal of the first switch ($S_1$) is connected to a first terminal of the second switch ($D_2$) and to the second output (13a) of the boost and buck converter and the second terminal of the second switch ($D_2$) is connected to the first input (1) of the boost converter (16a).

Fig. 1a

**Description**

The present invention relates generally to a DC-DC boost and buck converter.

A photovoltaic cell directly converts solar energy into electrical energy. The electrical energy produced by the photovoltaic cell can be extracted over time and used in the form of electric power. The direct electric power provided by photovoltaic cell is provided to conversion devices like DC-DC converter circuits and to DC/AC inverter circuits which maintain a desired output voltage.

However, according to climatic variations, the current-voltage characteristics of photovoltaic cells change. Despite such current-voltage variations, the DC-DC converter maintains a stable voltage at its output. The output voltage of the DC-DC converter may be lower, equal or upper than the voltage provided by the photovoltaic source. When the output voltage of the DC-DC is upper than the voltage provided by the photovoltaic source, the DC-DC converter acts as a Boost converter. When the output voltage of the DC-DC is lower than the voltage provided by the photovoltaic source, the DC-DC converter acts as a Buck converter.

By adjusting the duty cycle of signal or signals controlling switches of the DC-DC converter, the energy transfer from input to output of the DC-DC converter between passive storage devices such as capacitor(s) or inductor(s) is managed in order to keep constant output voltage of the DC-DC converter.

Then, the DC/AC converter converts the voltage at the output of the DC-DC converter in order to fulfill grid requirement. State of the art buck-boost converters can be used differently: if duty cycle is able to follow a desired voltage law, as for instance a rectified sinusoidal waveform, a low frequency switching inverter stage generates a sinusoidal waveform. Switching losses are then reduced, increasing the global converter efficiency.

A well known buck-boost converter is Four Switch Buck Boost (FSBB) converter as disclosed in the patent US5734258. Buck, boost and buck-boost modes are possible. It requires 4 switches.

The present invention aims at providing a new structure of buck-boost converter which allows to parallelize the components which perform the boost function in order to use less expensive components than the state of the art and to avoid thermal losses occurring in at least one component which performs the boost function.

To that end, the present invention concerns a DC-DC boost and buck converter comprising a boost converter and components enabling the boost converter to act as a buck converter, a first input of the boost converter being connected to a first input of the DC-DC boost and buck converter, a second input of the boost converter being connected to a second input of the DC-DC boost and buck converter, a first output of the boost converter being connected to a first output of the DC-DC boost and buck converter, **characterized in that** the components enabling the boost converter to act as a buck converter are a first and a second switches, a first terminal of the first switch is connected to the second output of the boost converter, a second terminal of the first switch is connected to a first terminal of the second switch and to the second output of the boost and buck converter and the second terminal of the second switch is connected to the first input of the boost converter.

Thus, it is possible to parallelize the components which perform the boost function in order to use less expensive components than the state of the art and to avoid thermal losses occurring in at least one component which performs the boost function.

According to a particular feature, the second switch is a first diode, the first terminal of the second switch is the anode of the first diode and the second terminal of the second switch is the cathode of the first diode.

According to a particular feature, the DC-DC boost and buck converter further comprises a capacitor which is connected between the first output of the boost converter and the second terminal of the first switch.

According to a particular feature, the DC-DC boost and buck converter comprises a capacitor which is connected between the first output of the boost converter and the first terminal of the first switch.

According to a particular feature, the boost converter is composed of an inductor, a third and a fourth switches and a first terminal of the inductor is connected to the first input of the boost converter, a second terminal of the inductor is connected to a first terminal of the fourth switch of the boost converter and to a first terminal of the third switch, the second terminal of the fourth switch is connected to the first output of the boost converter and the second terminal of the third switch of the boost converter is connected to the second output of the boost converter.

According to a particular feature, the second switch is not included in the current loop constituted by the inductor and the third switch when the DC-DC boost and the buck converter acts in boost mode and when the third switch is conducting. Thus, the present invention avoids that thermal losses occur in the first switch. According to a particular feature, the fourth switch is a second diode, the first terminal of the fourth switch is the anode of the second diode and the second terminal of the second switch is the cathode of the second diode.

According to a particular feature, the DC-DC boost and buck converter comprises at least two boost converters connected in parallel.

The present invention concerns also an inverter comprising a DC-DC boost and buck converter according to the present invention.

Thus, the present invention allows to parallelize the components which perform the boost function in order to use less expensive components than the state of the art.

The characteristics of the invention will emerge more clearly from a reading of the following description of an example embodiment, the said description being produced with reference to the accompanying drawings, among which :

Fig. 1a is a first example of a boost DC-DC converter on which components are added in order to perform the buck conversion according to the present invention;

Fig. 1b is an example of parallelized boost DC-DC converters on which components are added in order to perform the buck conversion according to the present invention;

Fig. 1c is a first particular mode of realization of a boost and buck DC-DC converter according to the present invention;

Fig. 1d is a second particular mode of realization of a boost and buck DC-DC converter according to the present invention;

Fig. 2 represents an example of a device comprising the boost and buck DC-DC converter according to the present invention;

Fig. 3a represents a first example of command signals used for controlling the boost and buck DC-DC converter according to the invention;

Fig. 3b represents a second example of command signals used for controlling the boost and buck DC-DC converter according to the invention;

Fig. 4 represents the transfer function of the output voltage over the input voltage of a boost and buck DC-DC converter according to the duty cycle of signals controlling the switches of the boost and buck DC-DC converter;

Fig. 5 represents the current and voltage variations of an inductor of the boost and buck DC-DC converter and the voltage output variation of the boost and buck DC-DC converter when the boost and buck DC-DC converter acts as a buck converter with a duty cycle lower than 0.5;

Fig. 6 represents the current and voltage variations of an inductor of the boost and buck DC-DC converter and the voltage output variation of the boost and buck DC-DC converter when the input voltage of the boost and buck DC-DC converter is equal to the output voltage of the boost and buck DC-DC converter with a duty cycle equal to 0.5;

Fig. 7 represents the current and voltage variations of an inductor of the boost buck DC-DC converter and the voltage output variation of the boost and buck DC-DC converter when the boost and buck DC-DC converter acts as a boost converter with a duty cycle upper than 0.5.

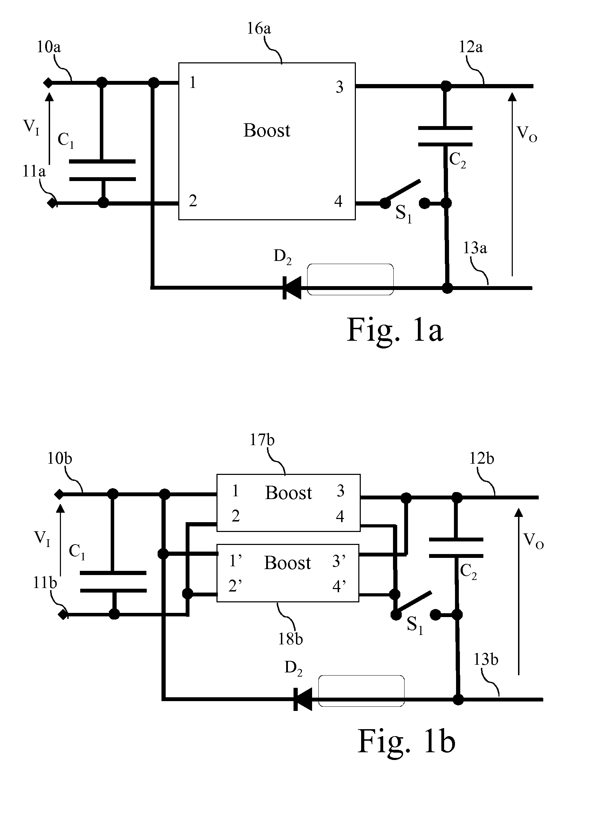

**Fig. 1a** is a first example of a boost DC-DC converter on which components are added in order to perform the buck conversion according to the present invention.

The DC-DC converter is composed of a boost DC-DC converter, one switch, the second, which is in a particular mode of realization a diode $D_2$, two capacitors $C_1$ and $C_2$ and one switch $S_1$.

The DC-DC converter has two input terminals 10a and 11a. For example, the DC-DC converter is connected a photovoltaic module. The present invention is also applicable in any DC power source.

The DC-DC converter has two output terminals 12a and 13a.

For example, the input terminal 10a is connected to the positive terminal of the DC power source and the input terminal 11a is connected to the negative terminal of the DC power source.

The capacitor $C_1$ is connected in parallel with the input terminals 10a and 11a.

A first input terminal 1 of the boost converter 16a is connected to the input terminal 10a and to the cathode of the diode $D_2$.

A second input terminal 2 of the boost converter 16a is connected to the input terminal 11a.

A first output terminal 3 of the boost converter 16a is connected to the output terminal 12a and to a first terminal of the capacitor $C_2$.

A second output terminal 4 of the boost converter 16a is connected to a first terminal of the switch $S_1$.

The second terminal of the capacitor $C_2$ is connected to the output terminal 13a, to the second terminal of the switch $S_1$ and to the anode of the diode $D_2$.

The switch $S_1$ and the diode $D_2$ are the components which allow the boost converter 16a to perform the buck function.

**Fig. 1b** is an example of parallelized boost DC-DC converters on which components are added in order to perform the buck conversion according to the present invention.

The DC-DC converter is composed of two boost DC-DC converters 17b and 18b, one switch, the second switch, which is in a particular mode of realization a diode $D_2$, two capacitors $C_1$ and $C_2$ and one switch $S_1$.

The DC-DC converter has two input terminals 10b and 11b. For example, the DC-DC converter is connected a photovoltaic module. The present invention is also applicable in any DC power source.

The DC-DC converter has two output terminals 12b and 13b.

For example, the input terminal 10b is connected to the positive terminal of the DC power source and the input terminal 11b is connected to the negative terminal of the DC power source.

The capacitor $C_1$ is connected in parallel with the input terminals 10b and 11b.

A first input terminal 1 of the boost converter 17b is connected to the input terminal 10b and to the cathode of the diode $D_2$.

A second terminal 2 of the boost converter 17b is connected to the input terminal 11b.

A first output terminal 3 of the boost converter 17b is connected to the output terminal 12b and to a first terminal of the capacitor $C_2$.

A second output terminal 4 of the boost converter 17b is connected to a first terminal of the switch $S_1$.

The second terminal of the capacitor $C_2$ is connected to the output terminal 13a, to the second terminal of the switch $S_1$ and to the anode of the diode $D_2$.

A first input terminal 1' of the boost converter 18b is connected to the input terminal 10b and to the cathode of the diode $D_2$.

A second input terminal 2' of the boost converter 18b is connected to the input terminal 11b.

A first output terminal 3' of the boost converter 18b is connected to the output terminal 12b and to a first terminal of the capacitor $C_2$.

A second output terminal 4' of the boost converter 17b is connected to a first terminal of the switch $S_1$.

The switch $S_1$ and the diode $D_2$ are the components which allow the boost converters 17b and 18b to perform the buck function.

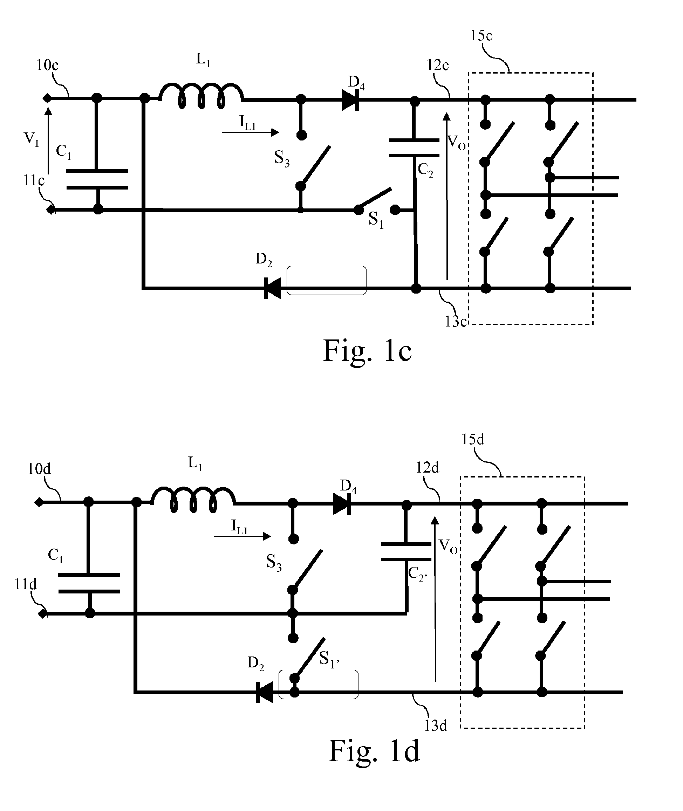

**Fig. 1c** is a first particular mode of realization of a boost buck DC-DC converter according to the present invention.

The DC-DC converter is composed of an inductor $L_1$, one switch which is in a particular mode of realization a diode D4 which is the fourth switch D4, one switch, the second switch, which is in a particular mode of realization a diode $D_2$, two capacitors $C_1$ and $C_2$ and two switches, the third switch $S_3$ and the first switch $S_1$ which are IGBT or MOSFET switches.

The DC-DC converter has two input terminals 10c and 11c. For example, the DC-DC converter is connected to a photovoltaic module. The present invention is also applicable in any DC power source.

The DC-DC converter has two output terminals 12c and 13c which are connected to a DC-AC converter 15c.

For example, the input terminal 10c is connected to the positive terminal of the DC power source and the input terminal 11c is connected to the negative terminal of the DC power source.

The capacitor $C_1$ is connected in parallel with the input terminals 10c and 11c.

A first terminal of the inductor $L_1$ is connected to the input terminal 10c and a second terminal of the inductor $L_1$ is connected to a first terminal of the switch $S_3$ and to the anode of the diode $D_4$.

The second terminal of the switch $S_3$ is connected to the input terminal 11c and to a first terminal of the switch $S_1$.

The cathode of the diode $D_4$ is connected to a first terminal of the capacitor $C_2$ and to the output terminal 12c.

The second terminal of the capacitor $C_2$ is connected to the output terminal 13c, to the second terminal of the switch $S_1$ and to the anode of the diode $D_2$.

The cathode of the diode $D_2$ is connected to the input terminal 10c.

The inductor $L_1$, the switch $S_3$ and the diode $D_4$ are the components which perform the boost function of the DC-DC converter.

The switch $S_1$ and the diode $D_2$ are the components which allow the inductor $L_1$, the switch $S_3$ and the diode $D_4$ to perform the buck function of the DC-DC converter.

According to the invention, the first terminal of the switch $S_1$ is connected to the second terminal of the switch $S_3$, the second terminal of the switch $S_1$ is connected to the anode of the diode $D_2$ and the cathode of the diode $D_2$ is connected to the first terminal of the inductor $L_1$.

**Fig. 1d** is a second particular mode of realization of a boost and buck DC-DC converter according to the present invention.

The DC-DC converter is composed of an inductor $L_1$, one switch which is in a particular mode of realization a diode $D_4$ which is the fourth switch, one switch, the second switch, which is in a particular mode of realization a diode $D_2$, two capacitors $C_1$ and $C_2$ and two switches, the third switch $S_3$ and the first switch $S_1$, which are IGBT or MOSFET switches.

The DC-DC converter has two input terminals 10d and 11d. For example, the DC-DC converter is connected to a photovoltaic module. The present invention is also applicable in any DC power source.

The DC-DC converter has two output terminals 12d and 13d which are connected to a DC-AC converter 15d.

For example, the input terminal 10d is connected to the positive terminal of the DC power source and the input terminal 11d is connected to the negative terminal of the DC power source.

The capacitor $C_1$ is connected in parallel with the input terminals 10d and 11d.

A first terminal of the inductor $L_1$ is connected to the input terminal 10d and a second terminal of the inductor $L_1$ is connected to a first terminal of the switch $S_3$ and to the anode of the diode $D_4$.

The second terminal of the switch $S_3$ is connected to the input terminal 11d and to a first terminal of the switch $S_{1'}$.

The cathode of the diode $D_4$ is connected to a first terminal of the capacitor $C_2$ and to the output terminal 12d.

The second terminal of the capacitor $C_2$ is connected to the second terminal of the switch $S_3$ and to the first terminal of the switch $S_{1'}$.

The second terminal of the switch $S_{1'}$ is connected to the anode of the diode $D_2$. The cathode of the diode $D_2$ is connected to the input terminal 10b.

The inductor $L_1$, the switch $S_3$ and the diode $D_4$ are the components which perform the boost function of the DC-DC converter.

The switch $S_{1'}$ and the diode $D_2$ are the components which perform the buck function of the DC-DC converter.

According to the invention, the first terminal of the switch $S_{1'}$ is connected to the second terminal of the switch $S_3$, the second terminal of the switch $S_{1'}$ is connected to the anode of the diode $D_2$ and the cathode of the diode $D_2$ is connected to the first terminal of the inductor $L_1$.

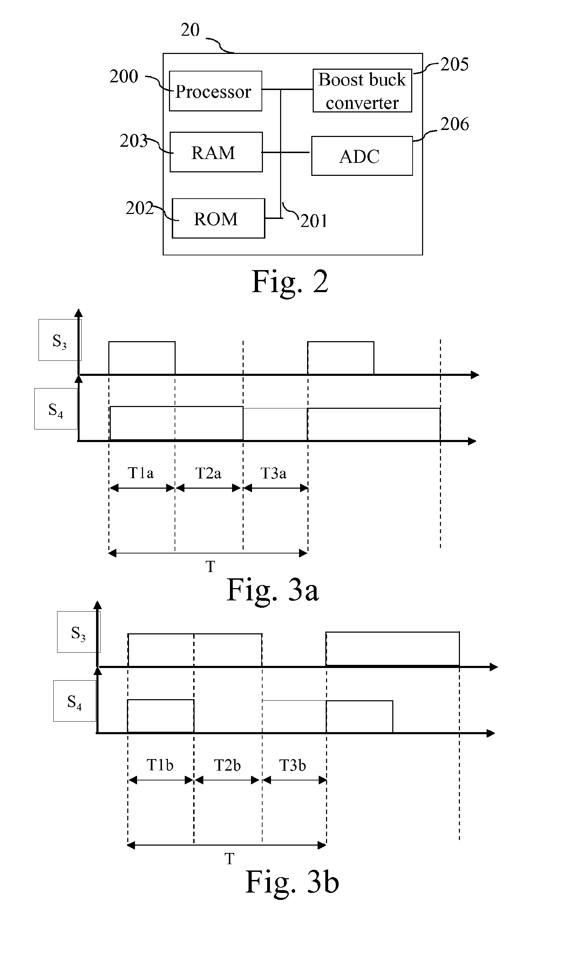

**Fig. 2** represents an example of a device comprising a buck and boost converter in which the present invention is implemented.

The device 20 is for example an inverter and has, for example, an architecture based on components connected together by a bus 201 and a processor 200 controlled by a program. The program enables the control of the switches $S_3$ and $S_1$ or $S_{1'}$ in order to provide a controlled output voltage $V_{out}$ of the DC-DC converter 205 and to put the buck and boost converter in buck or boost mode according to the value of duty cycle.

It has to be noted here that the device 20 is, in a variant, implemented under the form of one or several dedicated integrated circuits which execute the same operations as the one executed by the processor 200 as disclosed hereinafter.

The bus 201 links the processor 200 to a read only memory ROM 202, a random access memory RAM 203, an analogue to digital converter ADC 306 and the DC-DC converter as the one disclosed in Fig. 1a or 1b or 1c or 1d.

The read only memory ROM 202 contains instructions of the program which are transferred, when the device 20 is powered on to the random access memory RAM 203.

The analogue to digital converter 206 is connected to the DC-DC converter 205 and converts voltages representative of the output voltage $V_{out}$ into binary information.

**Fig. 3a** represents a first example of command signals used for controlling the boost and buck DC-DC converter according to the invention.

In the first example given in reference to Fig. 3a, the command signal which controls the switch $S_3$ of Fig. 1c has a duty cycle which is smaller than the one of the command signal which controls the switch $S_1$ of Fig. 1c.

The command signal which controls the switch $S_3$ has the same period as the one of the command signal which controls the switch $S_1$.

During the period noted T1a, the command signal of the switch $S_3$ has a first predetermined voltage corresponding to logical high level and the switch $S_3$ is conducting. The command signal of the switch $S_1$ has the first predetermined voltage and the switch $S_1$ is conducting.

During the period noted T2a, the command signal of the switch $S_3$ has a second predetermined voltage corresponding to logical low level, lower than the first predetermined voltage and the switch $S_3$ is not conducting. The command signal of the switch $S_1$ has the first predetermined voltage and the switch $S_1$ is conducting.

During the period noted T3a, the command signal of the switch $S_3$ has the second predetermined voltage and the switch $S_3$ is not conducting. The command signal of the switch $S_1$ has the second predetermined voltage and the switch $S_1$ is not conducting.

When the switch $S_1$ is not conducting, the diode $D_2$ is conducting and when the switch $S_1$ is conducting, the diode $D_2$ is not conducting.

We obtain $\dfrac{V_0}{V_I} = \dfrac{dtc2}{1-dtc1}$ , where $V_I$ is the voltage between input terminals 10a and 11a, $V_O$ is the voltage between output terminals 12c and 13c, dtc1 is the duty cycle of the command signal of the switch $S_3$ and dtc2 is the duty cycle of the command signal of the switch $S_1$. **Fig. 3b** represents a second example of command signals used for controlling the boost and buck DC-DC converter according to the invention.

In the second example given in reference to Fig. 3b, the command signal which controls the switch $S_1$ of Fig. 1c has a duty cycle which is smaller than the one of the command signal which controls the switch $S_3$ of Fig. 1c.

The command signal which controls the switch $S_3$ has the same period as the one of the command signal which controls the switch $S_1$.

During the period noted T1b, the command signal of the switch $S_3$ has a first predetermined voltage corresponding to logical high level and the switch $S_3$ is conducting. The command signal of the switch $S_1$ has the first predetermined voltage and the switch $S_1$ is conducting.

During the period noted T2b, the command signal of the switch $S_1$ has a second predetermined voltage corresponding to logical low level, lower than the first predetermined voltage and the switch $S_1$ is not conducting. The command signal of the switch $S_3$ has the first predetermined voltage and the switch $S_3$ is conducting.

During the period noted T3b, the command signal of the switch $S_3$ has the second predetermined voltage and the switch $S_3$ is not conducting. The command signal of the switch $S_1$ has the second predetermined voltage and the switch $S_1$ is not conducting.

When the switch $S_3$ is not conducting, the diode $D_4$ is conducting and when the switch $S_3$ is conducting, the diode $D_4$ is not conducting.

We obtain $\dfrac{V_0}{V_I} = \dfrac{dtc1}{1-dtc1}$ , where $V_I$ is the voltage between input terminals 10a and 11a, $V_O$ is the voltage between output terminals 12c and 13c, dtc1 is the duty cycle of the command signal of the switch $S_3$ and dtc2 is the duty cycle of the command signal of the switch $S_1$.

As it can be understood from equations given in example 3a and 3b, if dtc1=dtc2=dtc,

$$\frac{V_0}{V_I} = \frac{dtc}{1-dtc} \,..$$

If *dtc* < 0.5, the DC-DC converter is in buck mode, $\dfrac{V_O}{V_I} < 1$ and if *dtc* > 0.5, the DC-DC converter is in boost mode $\dfrac{V_O}{V_I} > 1$.

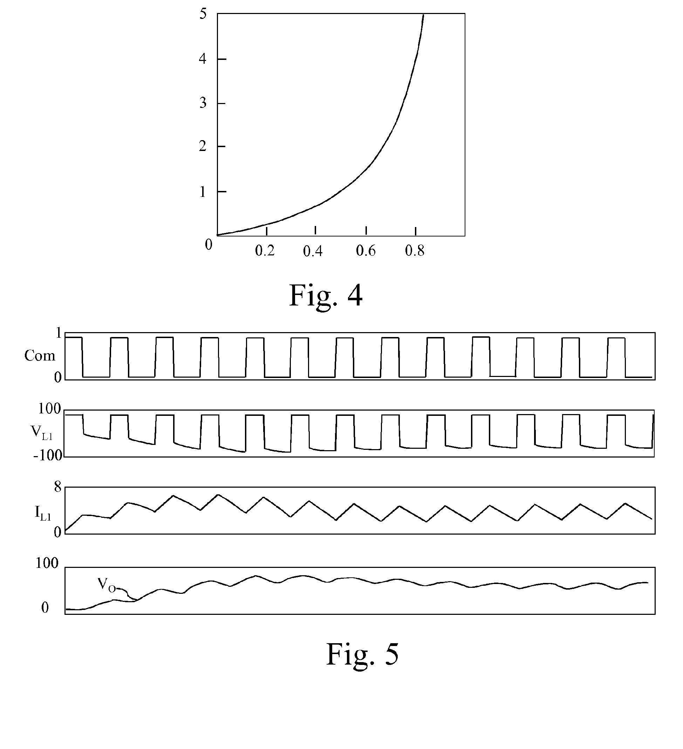

**Fig. 4** represents the transfer function of the output voltage over the input voltage of a boost and buck DC-DC converter according to the duty cycle of signals controlling the switches of the boost and buck DC-DC converter.

On the horizontal axis, the different values of dtc as shown and the vertical axis represent $\dfrac{V_0}{V_I}$.

**Fig. 5** represents the current and voltage variations of an inductor of the boost and buck DC-DC converter and the voltage output variation of the DC-DC converter when the boost and buck DC-DC converter acts as a buck converter with a duty cycle lower than 0.5.

For example, the duty cycle dtc is equal to 0.4, the frequency of the command signal of the switches $S_3$ and $S_1$ of Fig. 1c is 20KHz and the input voltage is equal to 100V.

Com denotes the command signal of the switches $S_3$ and $S_1$, $V_{L1}$ denotes the voltage between the terminal of $L_1$ and $I_{L1}$ denotes the current provided by $L_1$.

The horizontal axis represents the time. As it can be seen in Fig. 5, the voltage at the output of the DC-DC converter is equal to 66V.

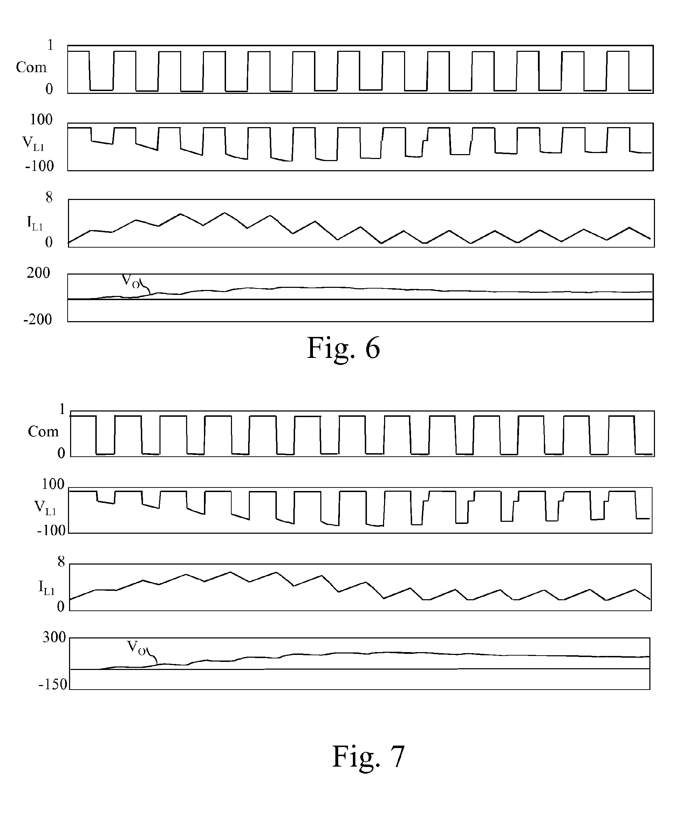

**Fig. 6** represents the current and voltage variations of an inductor of the boost and buck DC-DC converter and the voltage output variation of the boost and buck DC-DC converter when the input voltage of the boost and buck DC-DC converter is equal to the output voltage of the boost and buck DC-DC converter with a duty cycle equal to 0.5.

The duty cycle dtc is equal to 0.5, the frequency of the command signal of the switches $S_3$ and $S_1$ of Fig. 1c is 20KHz and the input voltage is equal to 100V.

Com denotes the command signal of the switches $S_3$ and $S_1$, $V_{L1}$ denotes the voltage between the terminal of $L_1$ and $I_{L1}$ denotes the current provided by $L_1$.

The horizontal axis represents the time. As it can be seen in Fig. 6, the voltage at the output of the DC-DC converter is equal to 100V.

**Fig. 7** represents the current and voltage variations of an inductor of the boost and buck DC-DC converter and the voltage output variation of the boost and buck DC-DC converter when the boost and buck DC-DC converter acts as a boost converter with a duty cycle upper than 0.5.

For example, the duty cycle dtc is equal to 0.6, the frequency of the command signal of the switches $S_3$ and $S_1$ of Fig. 1c is 20KHz and the input voltage is equal to 100V.

Com denotes the command signal of the switches $S_3$ and $S_1$, $V_{L1}$ denotes the voltage between the terminal of $L_1$ and $I_{L1}$ denotes the current provided by $L_1$.

The horizontal axis represents the time. As it can be seen in Fig. 7, the voltage at the output of the DC-DC converter is equal to 150V.

It has to be noted here that the switch $S_1$ is not included in the current loop constituted by the inductor $L_1$, the switch $S_3$ when the DC-DC boost and buck converter acts in boost mode and the switch $S_3$ is conducting.

Naturally, many modifications can be made to the embodiments of the invention described above without departing from the scope of the present invention.

**Claims**

1. DC-DC boost and buck converter comprising a boost converter and components enabling the boost converter to act as a buck converter, a first input of the boost converter being connected to a first input of the DC-DC boost and buck converter, a second input of the boost converter being connected to a second input of the DC-DC boost and buck converter, a first output of the boost converter being connected to a first output of the DC-DC boost and buck converter, **characterized in that** the components enabling the boost converter to act as a buck converter are a first and a second switches, a first terminal of the first switch is connected to the second output of the boost converter, a second terminal of the first switch is connected to a first terminal of the second switch and to the second output of the boost and buck converter and the second terminal of the second switch is connected to the first input of the boost converter.

2. DC-DC boost and buck converter according to claim 1, **characterized in that** the second switch is a first diode, the first terminal of the second switch is the anode of the first diode and the second terminal of the second switch is the cathode of the first diode.

3. DC-DC boost and buck converter according to claim 1 or 2, **characterized in that** it further comprises a capacitor which is connected between the first output of the boost converter and the second terminal of the first switch.

4. DC-DC boost and buck converter according to claim 1 or 2, **characterized in that** it further comprises a capacitor which is connected between the first output of the boost converter and the first terminal of the first switch.

5. DC-DC boost and buck converter according to any of the claims 1 to 4, **characterized in that** the boost converter is composed of an inductor, a third and a fourth switches and **in that** a first terminal of the inductor is connected to the first input of the boost converter, a second terminal of the inductor is connected to the a first terminal of the fourth switch and to a first terminal of the third switch of boost converter, the second terminal of the fourth switch is connected to the first output of the boost converter and the second terminal of the third switch of the boost converter is connected to the second output of the boost converter.

6. DC-DC boost and buck converter according to claim 5, **characterized in that** the first switch is not included in the current loop constituted by the inductor and the third switch when the DC-DC boost and buck converter acts in boost mode and when the third switch is conducting.

7. DC-DC boost and buck converter according to claim 5 or 6, **characterized in that** the fourth switch is a second diode, the first terminal of the fourth switch is the anode of the second diode and the second terminal of the second switch is the cathode of the second diode.

8. DC-DC boost and buck converter according to any of the claims 1 to 7, **characterized in that** it comprises at least two boost converters connected in parallel.

9. Inverter **characterized in that** it comprises a DC-DC boost and buck converter according to any of the claims 1 to 8.

Fig. 1a

Fig. 1b

Fig. 1c

Fig. 1d

20

200 — Processor   Boost buck converter — 205

203 — RAM   ADC — 206

202 — ROM   201

## Fig. 2

$S_3$

$S_4$

T1a   T2a   T3a

T

## Fig. 3a

$S_3$

$S_4$

T1b   T2b   T3b

T

## Fig. 3b

Fig. 4

Fig. 5

Fig. 6

Fig. 7

**EP 2 779 397 A1**

Europäisches
Patentamt

European
Patent Office

Office européen
des brevets

# EUROPEAN SEARCH REPORT

Application Number

EP 13 15 9466

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2004/245966 A1 (FUENTES HUGO JORQUERA [FR]) 9 December 2004 (2004-12-09) <br> * paragraph [0003] * <br> * paragraph [0006] * <br> * paragraph [0012] - paragraph [0037] * <br> * figures 1-4 * | 1-9 | INV. <br> H02M3/158 |
| X | JP H06 269161 A (MATSUSHITA ELECTRIC WORKS LTD) 22 September 1994 (1994-09-22) <br> * abstract * <br> * paragraph [0021] * <br> * paragraph [0028] - paragraph [0034] * <br> * paragraph [0041] - paragraph [0042] * <br> * paragraph [0044] - paragraph [0050] * <br> * figure 2 * | 1-9 | |
| A | BORDONAU J ET AL: "Topologies of Single-Phase Inverters for Small Distributed Power Generators: An Overview", <br> IEEE TRANSACTIONS ON POWER ELECTRONICS, IEEE SERVICE CENTER, PISCATAWAY, NJ, US, vol. 19, no. 5, <br> 1 September 2004 (2004-09-01), pages 1305-1314, XP011118252, <br> ISSN: 0885-8993, DOI: 10.1109/TPEL.2004.833460 <br> * the whole document * | 9 | TECHNICAL FIELDS SEARCHED (IPC) <br><br> H02M <br> H02J |
| A | US 2007/096700 A1 (WENG HSIANG-CHUNG [TW] ET AL) 3 May 2007 (2007-05-03) <br> * paragraph [0005] * <br> * figure 2 * | 8 | |
| A | US 2009/316453 A1 (MANABE KOTA [JP] ET AL) 24 December 2009 (2009-12-24) <br> * paragraph [0002] * <br> * figure 1 * | 8,9 | |

The present search report has been drawn up for all claims

| Place of search | Date of completion of the search | Examiner |
|---|---|---|
| The Hague | 25 July 2013 | Lochhead, Steven |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

13

**ANNEX TO THE EUROPEAN SEARCH REPORT
ON EUROPEAN PATENT APPLICATION NO.**

EP 13 15 9466

This annex lists the patent family members relating to the patent documents cited in the above-mentioned European search report.
The members are as contained in the European Patent Office EDP file on
The European Patent Office is in no way liable for these particulars which are merely given for the purpose of information.

25-07-2013

| Patent document cited in search report | | Publication date | Patent family member(s) | | Publication date |
|---|---|---|---|---|---|
| US 2004245966 | A1 | 09-12-2004 | DE 102004012310 | A1 | 23-09-2004 |
| | | | FR 2852463 | A1 | 17-09-2004 |
| | | | US 2004245966 | A1 | 09-12-2004 |
| JP H06269161 | A | 22-09-1994 | NONE | | |
| US 2007096700 | A1 | 03-05-2007 | TW I289971 | B | 11-11-2007 |
| | | | US 2007096700 | A1 | 03-05-2007 |
| US 2009316453 | A1 | 24-12-2009 | CN 101529705 | A | 09-09-2009 |
| | | | DE 112007002396 | T5 | 30-07-2009 |
| | | | JP 4967595 | B2 | 04-07-2012 |
| | | | JP 2008104320 | A | 01-05-2008 |
| | | | KR 20090054469 | A | 29-05-2009 |
| | | | US 2009316453 | A1 | 24-12-2009 |
| | | | WO 2008047617 | A1 | 24-04-2008 |

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5734258 A